# EUROPÄISCHE PATENTSCHRIFT

(11) **EP 0 678 364 B1**
(45) Veröffentlichungstag und Bekanntmachung des Hinweises auf die Patenterteilung: **26.08.1998**
(21) Anmeldenummer: 95105061.6
(22) Anmeldetag: 05.04.1995
(51) Int. Cl.: B29B 7/74

(54) **Vorrichtung zum Aufnehmen und Abtransportieren des Mischgutes bei zur Behandlung von Kautschukmischungen dienenden Innenmischern**
Device for accepting and transporting the mixture from internal mixers for rubber mixtures
Dispositif pour accueillir et transporter le mélange à partir de mélangeurs internes de mélanges de caoutchouc

(30) Priorität: 22.04.1994 DE 4414039
(43) Veröffentlichungstag der Anmeldung: 25.10.1995
(73) Patentinhaber: Continental Aktiengesellschaft, 30165 Hannover (DE); Julius, Peter Dr., A-1130 Wien (AT)
(72) Erfinder: Julius, Peter, Dr., A-1130 Wien (AT)
(74) Vertreter: Depmeyer, Lothar

(56) Entgegenhaltungen:
- GB-A- 649 249

## Beschreibung

Die Erfindung betrifft eine Vorrichtung zum Aufnehmen und Abtransportieren des Mischgutes bei zur Behandlung von Kautschukmischungen dienenden Innenmischern.

Unter Innenmischern werden hierbei solche chargenweise arbeitenden Mischeinrichtungen verstanden, die eine Behandlungskammer zur Aufnahme des Mischgutes und sich darin drehende, den Knet- und Mischvorgang bewirkende Rotoren und ferner unten an der Behandlungskammer eine Klappe - meist Klappsattel genannt - aufweisen, die die Austrittsöffnung für das Mischgut verschliessen kann und zum Entleeren der Behandlungskammer um eine waagerechte Achse nach unten verschwenkt wird.

Ein derartiger Innenmischer ist aus der US-A-4,910,237 bekannt.

Bei diesen Mischeinrichtungen insb. jedoch bei zwei übereinander angeordneten Einrichtungen dieser Art ergeben sich nicht unerhebliche Bauhöhen; dies ist insb. auch dann der Fall, wenn der Mischeinrichtung Walzwerke, Extruder od. dgl. unmittelbar nachgeschaltet sind. Hinzu kommt, dass das Mischgut die Mischeinrichtung im freien Fall verlässt, wodurch die Gefahr entsteht, dass Mischgut zur Seite hin wegspringt und oft anderen Chargen hinzugefügt wird. Dadurch ergeben sich Ungenauigkeiten im Hinblick auf die Mischungsqualität.

Aufgrund der Erfindung sollen diese Nachteile aufgehoben, zumindest aber deren Folgen wesentlich gemindert werden. Es soll also eine Verringerung der Fallhöhe und damit eine Reduzierung der Bauhöhe ermöglicht und weiterhin sichergestellt werden, dass das Mischgut praktisch ohne Verluste abgeführt und dem weiteren Behandlungsprozess der Kautschukmischung sachgerecht zugeführt werden kann.

Zur Lösung dieser Aufgabe sind erfindungsgemäss zur Aufnahme des Mischgutes unterhalb der Austrittsöffnung der Behandlungskammer eine oder mehrere Behälter vorgesehen, die nach der Beschickung in Schliessrichtung der Klappe und vor deren Schliessbewegung zur Seite hin abziehbar sind. Damit ist sichergestellt, dass die Behälter mit dem ggfs. darin aufgetürmten Mischgut nahe unterhalb der Austrittsöffnung der Behandlungskammer angeordnet werden können. Eine Berührung durch die Klappe kann nicht stattfinden.

Zweckmässigerweise sind diese Behälter Bestandteil einer Fördereinrichtung z.B. eines umlaufenden Förderers, dessen entleerte Behälter in vorbestimmten Bahnen von der Ladestation zur Entladestelle und wieder zurück zur Ladestation geführt werden. Vorzugsweise sind die Behälter auch als Kippbehälter in der Weise ausgeführt, dass eine Behälterentleerung durch Kippen des Behälters geschehen kann. Ferner kann den Behältern auch ein Gehänge zugeordnet werden, um die Behälter z.B. nach ihrer Beschickung einer Gehängebahn zuführen zu können.

Diese Behälter können zur Beschickung so nahe unterhalb der Entleeerungsöffnung der Mischkammer angeordnet werden, dass sie bzw. das aufgehäufte Mischgut sich im Schwenkbereich der erwähnten Klappe, zumindest aber in der Nähe dieses Bereiches befinden, ohne befürchten zu müssen, dass die schliessende Klappe mit dem Behälter und/oder dessen Inhalt in Berührung kommt. Das Mischgut kann den Behälter nicht verfehlen oder nach Erreichen des Behälters wieder "wegspringen". Bei Anwendung der erfindungsgemässen Vorrichtung können zudem Bauhöhenminderungen von 80 - 150 cm erreicht werden.

Wenn der mit dem Mischgut beladene Behälter in einer Fördereinrichtung auf dem Wege zu einer weiteren Behandlungsstation ist, kann sein Inhalt geprüft, gewogen oder in anderer Weise behandelt werden. Somit kann der Transportweg weiteren, nützlichen Zwecken dienen.

Weitere Einzelheiten der Erfindung werden anhand der Zeichnung erläutert, in der Ausführungsbeispiele der Erfindung dargestellt sind. Es zeigen :
Fig. 1 eine Mischeinrichtung in schematischer Darstellung in der Ansicht und
Fig. 2 und 3 je die Mischeinrichtung gemäss Fig. 1, jedoch in abgewandelten Betriebszuständen.

Vorgesehen sind zwei sog. Innenmischer für die herzustellende Kautschukmischung.

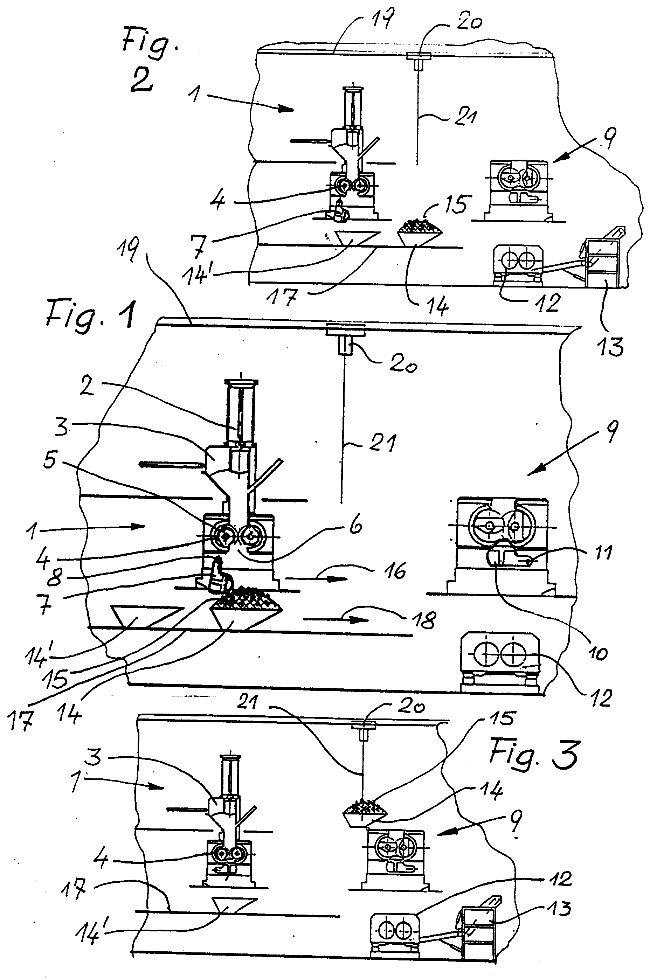

Der Mischer 1 ist ein Stempelkneter mit einem Stempel 2, einer Einfüllöffnung 3, einer Mischkammer 4, darin drehbar angeordneten Rotoren 5, einer Austrittsöffnung 6 für das behandelte Mischgut und einer zum Verschliessen der Austrittsöffnung 6 dienenden Klappe 7, die um eine waagerechte Achse 8 verschwenkbar ist und im geöffneten Zustand gemäss Fig. 1 nach einem Schwenkweg von etwa 90° etwa senkrecht nach unten zeigt. Demgemäss liegt die Klappe 7 etwa waagerecht, wenn sie die Mischkammer 4 verschlossen hat.

Während der Mischer 1 vorzugsweise zur Herstellung der Grundmischung dient, kann der Mischer 9 zur Herstellung der Fertigmischung benutzt werden. Der Mischer 9 hat ebenfalls eine Einfüllöffnung 3, eine Mischkammer 4 und Rotoren 5, damit er als Kneter arbeiten kann. Seine Klappe 10 ist geschlossen, die waagerechte Schwenkachse hat das Bezugszeichen 11. Im Vergleich zum Mischer 1 hat der Mischer 9 keinen Stempel; er ist also stempellos ausgeführt. Daher kann das Mischgut über die Einfüllöffnung 3 der Mischkammer 4 unmittelbar zugeführt werden.

Unterhalb des Mischers 9 befindet sich ein Walzwerk 12, von dem aus die fertige Gummimischung zur Fellbehandlung od. dgl. bei 13 weitergeleitet werden kann.

Erfindungswesentlich ist nun, dass die im Mischer 1 behandelte Gummimischung im freien Fall in einen oben offenen Behälter 14 gelangt, wenn die Klappe 7 von der Schliesstellung in die Stellung gemäss Fig. 1 geführt wird (Offenstellung). Die eingefüllte Gummimischung ist mit 15 bezeichnet. Der Behälter 14 ist ein Schüttbehälter und mit Armaturen ausgestattet, die eine Aufhängung und Kippbewegung erlauben. Diese Elemente können jedoch beliebig gewählt werden.

Der Behälter 14 wird unter die Austrittsöffnung 6 gebracht, wenn der Mischprozess im Mischer 1 noch nicht beendet und damit die Klappe 7 noch geschlossen ist. Wird die Klappe 7 nach unten geschwenkt, so tritt das Mischgut im freien Falle aus der Austrittsöffnung 6 aus und gelangt in den Behälter 14, der gefüllt und dann in Schliessrichtung 16 der Klappe 7 auf einer waagerechten Bahn 17 im Sinne des Pfeiles 18 abgezogen bzw. entfernt wird. Unmittelbar nach Abzug des Behälters 14 wird der nächste Behälter 14' unter die Austrittsöffnung 6 gefördert. Vgl. dazu Fig. 2.

Um die Gummimischung 15 der nächsten Bearbeitungsstation zuleiten zu können, ist oberhalb des Mischers 1 eine waagerechte Führungsbahn 19 für eine Laufkatze 20 vorgesehen, deren Hubseil 21 den Behälter 14 erfasst, anhebt und über den Mischer 9 befördert. Vgl. dazu Fig. 3 der Zeichnung. Alsdann wird der Behälter 14 gekippt, um die Gummimischung 15 dem Mischer 2 übergeben zu können.

Nach Vollendung des Mischvorganges im Mischer 9 wird dessen Klappe 10 geöffnet, damit die fertige Mischung im freien Fall in das Walzwerk 12 gelangen kann, von dem die Mischung als Fell der Anlage bei 13 zugeleitet wird.

Bedeutungsvoll ist, dass mit dem Schliessen der Klappe 7 des Mischers 1 bereits ein neuer Behälter 14 in die Bereitstellung verbracht wird. Dabei kann die Handhabung der Behälter 14 so vollzogen werden, dass sich unterhalb des Mischers 1 praktisch stets (von der Übergangszeit abgesehen) ein Behälter 14 befindet, um auch bei Fehlschaltungen und Fehlbedienungen der Apparaturen einen Auffangbehälter zur Stelle zu haben.

Wie erwähnt, können die Bahnen 17, 19 Kreisbahnen sein, um einen Behälterumlauf zu ermöglichen.

Es ist auch möglich, z.B. dem Mischer 9 nicht nur einen Mischer 1, sondern weitere zuzuordnen; dies kann durch eine entsprechende Ausbildung und Steuerung der Zuführungsbahnen 17 und 19 erreicht werden. Schliesslich ist es auch bei entsprechender Bahnführung möglich, ein Depot für leere Behälter 14 zu bilden, um sie spezifisch z.B. nach Grösse, Beschaffenheit und dgl. aussuchen und entsprechend einsetzen zu können. Allerdings ist es bei vielen Anwendungsfällen vorteilhaft, die Beförderung des Mischgutes 15 vom Mischer 1 zum Mischer 2 schnell zu vollziehen in der Weise, dass das Mischgut 15 praktisch nicht abkühlt.

Es sei erwähnt, dass im Sinne der Erfindung unter der Schliessrichtung 16 der Klappe 7 die Richtung verstanden wird, die die Klappenspitze von der etwa senkrechten Ruhestellung aus zu Beginn der Schliessbewegung der Klappe 7 beschreibt ( waagerechte Komponente der gekrümmten Schwenkbahn ). Ferner kann das für die Behälter 14 vorgesehene Transportelement ( Laufkatze 20 ) so ausgeführt sein, dass es vorwärts, rückwärts oder seitlich bewegt werden kann. Auch können zum Transport der Behälter 14 hydraulisch oder pneumatisch ausfahrbare, ggfs. um eine Achse schwenk- oder dreh- und/oder höhenverstellbare Greifer genutzt werden, die man zweckmässigerweise als Ausleger bzw. nach Art eines Armes ausführt. Schliesslich können die Behälter 14 nicht nur zwischen zwei Innenmischern, sondern auch zwischen einem Innenmischer und einem Walzwerk bzw. einem Schnecken- bzw. Doppelschneckenextruder bewegbar gelagert sein. Diese letztgenannte Anordnung ist besonders dann angebracht, wenn übereinander angeordnete Aggregate aus räumlichen Gründen nicht zweckmässig sind.

## Patentansprüche

1. Vorrichtung zum Aufnehmen und Abtransportieren des Mischgutes bei zur Behandlung von Kautschukmischungen dienenden Innenmischern, deren unten gelegene Austrittsöffnung durch eine um eine waagerechte Achse schwenkbare Klappe verschliessbar ist, dadurch gekennzeichnet, dass zur Aufnahme des Mischgutes unterhalb der Austrittsöffnung (6) eines Innenmischers (1) ein oder mehrere Behälter (14) vorgesehen sind, die nach ihrer Beschickung und vor dem Schliessen der Klappe (7) in Schliessrichtung (16) der Klappe (7) abziehbar sind.

2. Vorrichtung nach Anspruch 1, dadurch gekennzeichnet, dass die Behälter (14) Kippbehälter sind und Armaturen zum Anheben und Senken aufweisen.

3. Vorrichtung nach Anspruch 1, dadurch gekennzeichnet, dass die Behälter (14) derart nahe unterhalb der Austrittsöffnung (6) der Innenmischer aufstellbar sind, dass sie bzw. ihre Füllung (15) im Schwenkbereich oder nahe am Schwenkbereich der Klappe (7) angeordnet sind.

4. Vorrichtung nach Anspruch 1, dadurch gekennzeichnet, dass zumindest zwei, zumindest im wesentlichen waagerechte Bahnen (17,19) für den Transport der Behälter (14) mit unterschiedlicher Höhenlage vorgesehen sind, von denen die oben gelegene Bahn (19) mit einem laufkatzenähnlichen Förderelement ausgerüstet ist, mit dem die Behälter (14) angehoben, vorwärts, rückwärts oder seitlich transpotiert und/oder abgesenkt werden können.

5. Vorrichtung nach Anspruch 1, dadurch gekennzeichnet, dass die Behälter (14) Bestandteil eines umlaufenden Förderers sind.

6. Vorrichtung nach Anspruch 1, dadurch gekennzeichnet, dass im Bereich des Transportweges der Behälter (14) Prüf- und/oder Behandlungseinrichtungen für die Kautschukmischung (15) vorgesehen sind.

7. Vorrichtung nach Anspruch 1, dadurch gekennzeichnet, dass zwei hintereinander angeordnete Behälter (14,14') vorgesehen sind, von denen der erste (14) nach einer Beschickung in Schliessrichtung der Klappe (7) abziehbar und der zweite (14') als Leerbehälter in Schliessrichtung der Klappe (7) derart bewegbar ist, dass er unter die Austrittsöffnung (6) gelangt.

8. Vorrichtung nach Anspruch 1, gekennzeichnet durch eine Vielzahl von Behältern (14), die wahlweise den Innenmischern zuführbar sind.

9. Vorrichtung nach Anspruch 1, dadurch gekennzeichnet, dass die Behälter (14) zwischen einem mit einem Stempel versehenen Innenmischer (1) und einem ohne Stempel ausgerüsteten Innenmischer (9) bewegbar sind.

10. Vorrichtung nach Anspruch 9, dadurch gekennzeichnet, dass die Fördergeschwindigkeit zwischen den beiden Innenmischern so gross ist, dass das mitgeführte Mischgut (15) praktisch nicht abkühlt.

11. Vorrichtung nach Anspruch 1 und/oder 4, dadurch gekennzeichnet, dass zum Behältertransport hydraulisch oder pneumatisch ausfahrbare, vorzugsweise um eine Achse dreh-, schwenk- und/oder höhenverstellbare Greifarme dienen.

12. Vorrichtung nach Anspruch 1, dadurch gekennzeichnet, dass die Behälter (14) zwischen zwei Innenmischern bewegbar sind.

13. Vorrichtung nach Anspruch 1, dadurch gekennzeichnet, dass die Behälter (14) zwischen einem Innenmischer und einem Walzwerk bzw. einem Schneckenextruder bewegbar sind.

## Claims

1. Apparatus for receiving and conveying the material to be mixed in internal mixers, which are used to treat rubber mixturs and have a discharge aperture at the lower end which is closable by a flap which is pivotable about a horizontal axis, characterised in that one or more containers (14) are provided beneath the discharge aperture (6) of an internal mixer (1) for receiving the material to be mixed, said containers being removable in the closing direction (16) of the flap (7) after they have been charged and prior to the closure of the flap (7).

2. Apparatus according to claim 1, characterised in that the containers (14) are tipping containers and have fittings for raising and lowering purposes.

3. Apparatus according to claim 1, characterised in that the containers (14) are installable close to beneath the discharge aperture (6) of the internal mixers in such a manner that they are, or respectively their filling (15) is, disposed in the pivotal region, or close to the pivotal region, of the flap (7).

4. Apparatus according to claim 1, characterised in that at least two tracks (17, 19), which are at least substantially horizontal, are provided with a variable vertical position for the conveyance of the containers (14), the upper track (19) being provided with a carriage-like conveying member, by means of which the containers (14) can be raised, conveyed forwardly, rearwardly or laterally and/or lowered.

5. Apparatus according to claim 1, characterised in that the containers (14) are a component part of a circulatory conveyor.

6. Apparatus according to claim 1, characterised in that testing and/or treating arrangements for the rubber mixture (15) are provided in the region of the path of conveyance of the containers (14).

7. Apparatus according to claim 1, characterised in that two containers (14, 14') are provided, which are disposed one behind the other, of which the first (14) is removable in the closing direction of the flap (7) after being charged, and the second (14'), as an empty container, is so displaceable in the closing direction of the flap (7) that it passes beneath the discharge aperture (6).

8. Apparatus according to claim 1, characterised by a plurality of containers (14), which are selectively suppliable to the internal mixers.

9. Apparatus according to claim 1, characterised in that the containers (14) are displaceable between an internal mixer (1), which is provided with a ram, and an internal mixer (9), which has no ram.

10. Apparatus according to claim 9, characterised in that the conveying speed between the two internal mixers is so high that the entrained material to be mixed (15) virtually does not cool-down.

11. Apparatus according to claim 1 and/or 4, characterised in that hydraulically or pneumatically extendable gripping arms, which are preferably rotatable, pivotable and/or vertically adjustable about an axis, are used for the conveyance of the containers.

12. Apparatus according to claim 1, characterised in that the containers (14) are displaceable between two internal mixers.

13. Apparatus according to claim 1, characterised in that the containers (14) are displaceable between an internal mixer and a rolling mill, or respectively a screw extruder.

## Revendications

1. Dispositif de réception et de transport d'évacuation du produit mélangé pour des mélangeurs internes qui servent au traitement de mélanges de caoutchouc et dont l'ouverture de sortie située en bas, peut être fermée par un volet pivotant par rapport à un axe horizontal, **caractérisé** en ce que, pour recevoir le produit mélangé, il est prévu au-dessous de l'ouverture de sortie (6) d'un mélangeur interne, un ou plusieurs récipients (14) qui après leur chargement et avant la fermeture du volet (7), peuvent être retirés dans la direction de fermeture (16) du volet (7).

2. Dispositif selon la revendication 1, **caractérisé** en ce que les récipients (14) sont des récipients basculants et comportent des ferrures pour le levage et l'abaissement.

3. Dispositif selon l'a revendication 1, **caractérisé** en ce que les récipients (14) peuvent être placés assez près au-dessous de l'ouverture de sortie (6) des mélangeurs internes pour qu'eux-mêmes ou leur charge (15) soient disposés dans la zone de pivotement ou à proximité de la zone de pivotement du volet (7).

4. Dispositif selon la revendication 1, **caractérisé** en ce qu'il est prévu, à une position en hauteur différente pour le transport des récipients (14), au moins deux voies (17, 19) au moins sensiblement horizontales dont la voie (19) située en haut est équipée d'un élément convoyeur du genre chariot roulant, par lequel les récipients (14) peuvent être levés transportés vers l'avant, vers l'arrière ou latéralement et/ou abaissés.

5. Dispositif selon la revendication 1 **caractérisé** en ce que les récipients (14) font partie d'un convoyeur circulant.

6. Dispositif selon la revendication 1, **caractérisé** en ce que des dispositifs de contrôle et/ou de traitement pour le mélange de caoutchouc (15) sont prévus dans la région de la voie de transport des récipients (14).

7. Dispositif selon a revendication 1, **caractérisé** en ce qu'il est prévu deux récipients (14, 14') disposés l'un derrière l'autre, dont le premier (14) peut être retiré à la suite d'un chargement dans la direction de fermeture du volet (7) et dont le second (14') peut être déplacé comme récipient vide dans la direction de fermeture du volet (7) de telle sorte qu'il arrive au-dessous de l'ouverture de sortie (6).

8. Dispositif selon la revendication 1, **caractérisé** par une pluralité de récipients (15) qui peuvent être envoyés au choix aux mélangeurs internes.

9. Dispositif selon la revendication 1, **caractérisé** en ce que les récipients (14) peuvent être déplacés entre un mélangeur interne (1) pourvu d'un vérin et un mélangeur interne (9) dépourvu de vérin

10. Dispositif selon la revendication 9, **caractérisé** en ce que la vitesse de transport entre les deux mélangeurs internes est telle que le produit mélangé emporté (15) ne refroidit pratiquement pas.

11. Dispositif selon la revendication 1 et/ou 4, **caractérisé** en ce que des bras de préhension pouvant être déployés hydrauliquement ou pneumatiquement, de préférence réglables en hauteur, en rotation et/ou on pivotement par rapport à un axe, servent au transport des récipients.

12. Dispositif selon la revendication 1, **caractérisé** en ce que les récipients (14) peuvent être déplacés entre deux mélangeurs internes.

13. Dispositif selon la revendication 1, **caractérisé** en ce que les récipients (14) peuvent être déplacés entre un mélangeur interne et un laminoir ou une extrudeuse à vis.
